**Europäisches Patentamt**

**European Patent Office**

**Office européen des brevets**

(19)

(11) Veröffentlichungsnummer : **0 412 297 B1**

# (12) EUROPÄISCHE PATENTSCHRIFT

(45) Veröffentlichungstag der Patentschrift :
**29.12.93 Patentblatt 93/52**

(21) Anmeldenummer : **90112893.4**

(22) Anmeldetag : **06.07.90**

(51) Int. Cl.⁵ : **F16B 31/00**

(54) Schraubverbindung mit Keramikteilen.

(30) Priorität : **09.08.89 DE 8909546 U**

(43) Veröffentlichungstag der Anmeldung :
**13.02.91 Patentblatt 91/07**

(45) Bekanntmachung des Hinweises auf die
Patenterteilung :
**29.12.93 Patentblatt 93/52**

(84) Benannte Vertragsstaaten :
**DE FR GB NL**

(56) Entgegenhaltungen :
**EP-A- 0 256 919**
**DE-B- 2 941 165**
**DE-C- 3 710 624**

(73) Patentinhaber : **Ringsdorff-Werke GmbH**
**Drachenburgstrasse 1**
**D-53170 Bonn (DE)**

(72) Erfinder : **Schmitz-Graepp, Helmut, Dipl.-Ing.**
**Nikolaus-Becker-Strasse 3**
**D-5300 Bonn 2 (DE)**
Erfinder : **Schmidt, Bernd**
**Zanderstrasse 8**
**D-5300 Bonn 2 (DE)**

EP 0 412 297 B1

## Beschreibung

Die vorliegende Erfindung bezieht sich auf eine Schraubverbindung für Keramikteile einschließlich Teilen aus Kohlenstoff und Graphit mittels Schrauben, wobei eins der zu verbindenden Teile mit Gewinden versehene Sacklöcher und das andere mit diesen Sacklöchern fluchtende und geometrisch passende Vorrichtungen für die Aufnahme und Halterung der die zu verbindenden Teile zusammenspannenden Schrauben aufweist.

Derartige Schraubverbindungen dienen vorzugsweise zum Zusammenspannen von Teilen, die im wesentlichen statischen Belastungen ausgesetzt sind. Sie finden überall dort Anwendung, wo Teile von geringerer räumlicher Ausdehnung und/oder geringer Masse verwendet werden, um bestimmte räumliche Anordnungen herzustellen, bestimmte physikalische oder chemische Reaktionsbedingungen zu erhalten oder um eine Minimierung des Materialaufwands zu bewirken.

Nach dieser Anordnung werden leichte, dünnwandige Teile auf Grundplatten oder Blöcken festgespannt. Diese leichten, dünnwandigen Teile enthalten die mit Muttergewinden versehenen, speziell ausgeführten Sacklochbohrungen. Sie haben vorzugsweise die Form ebener oder einfach gebogener Platten oder nach oben offener oder geschlossener Hohlzylinder, deren Mantel geschlossen oder geteilt sein kann und deren Grundflächen beliebige Ausführungsformen haben können. Derartige Anordnungen aus Grundplatte und Suszeptorteil werden beispielsweise bei der Abscheidung von Substanzen oder Substanzgemischen aus Fluiden, z.B. bei elektrolytischen oder dem Plasma Enhanced Chemical Vapor Deposition-Verfahren (PECVD) verwendet.

Aus der europäischen Patentanmeldung Nr. 0 256 919 A1 ist eine Schraubvorrichtung zum Befestigen eines beliebigen Teils auf einer Wand, insbesondere einer dünnen Kunststoffwand bekannt, bei der auf der Wand als Hilfsmittel zur Verankerung der das beliebige Teil befestigenden Schraube zwei kleine, ebene und parallele Trennwände, deren gegenseitiger Abstand genau dem Durchmesser am Gewindegrund der Schraube entspricht und die gleich weit von der Achse entfernt sind, mit der die Schraubenachse nach der Verschraubung übereinstimmen soll, vorhanden sind. Zur Stabilisierung dieser parallelen Trennwände gegenüber dem auf sie von innen durch die Schraube aufgebrachten Druck sind diesem Druck entgegenwirkende äußere Stützelemente vorgesehen. Die die Teile zusammenspannende Schraube ist selbstschneidend und formt sich das sie haltende Gewinde beim Eindrehen zwischen die parallelen Trennwände selbst. Für das Verbinden von Teilen aus keramischen Werkstoffen miteinander ist eine solche Schraubvorrichtung nicht verwendbar. Selbstschneidende Schrauben würden den Keramikkörper beim Eindrehen entweder sprengen oder selbst so beschädigt werden, daß sie ihre Funktion nicht mehr erfüllen können. Zum Befestigen des beliebigen Teils auf der dünnen Wand sind zusätzliche, auf der Wand befindliche Teile in Form mindestens zweier paralleler Wände, die die Schraube aufnehmen, erforderlich. Bei Verwendung einer äquivalenten Befestigungsvorrichtung an keramischen Bauteilen müßten diese Teile in arbeitsaufwendigen Verfahren zusätzlich angeformt werden, was erhebliche Kosten verursachen würde. Derartige auskragenden Teile wären zudem wegen ihrer Bruchanfälligkeit als Befestigunghilfsmittel ungeeignet. Schließlich kann mit dieser Schraubvorrichtung zur Befestigung eine Minimierung des Materialeinsatzes bzw. der Materialstärken in Kopplung mit einer Optimierung der Festigkeit der Schraubverbindung nicht erreicht werden, was für eine angenommene, äquivalente Verwendung an aufwendigen keramischen Bauteilen erhebliche Nachteile hätte.

Zum sicheren Verspannen von Schrauben in den mit Muttergewinde versehenen Sacklochbohrungen von Teilen wird bei metallischen Werkstoffen die Wandstärke an der oder den Bohrungen stets größer als der Durchmesser des Muttergewindes gewählt (siehe z.B. Dubbel, Taschenbuch für den Maschinenbau, 15. Auflage, S. 374 bis 385, Springer-Verlag 1983). Falls dies nicht möglich ist, weist die Wand wenigstens an den Bohrungen entsprechende Verdickungen auf. Diese Erfordernisse werden besonders auch bei den spröden und spannungsrißempfindlichen keramischen Werkstoffen beachtet. Beim Verankern von Teilen mit geringer Wandstärke auf Unterlagen mittels Schrauben ergeben sich daraus aber empfindliche Nachteile: Infolge der geringen Wandstärke müssen die Bolzen der zur Befestigung vorgesehenen Schrauben mit entsprechend kleinen Durchmessern hergetellt werden. Dies ist technisch schwierig, erfordert hohen Arbeitsaufwand und ist mit hohen Bruchraten verbunden. Außerdem reicht die Zugfestigkeit der Schrauben für die vorgesehenen Anwendungsfälle oft nicht mehr aus. Zur Lösung dieses Problems könnte die Wandstärke des sacklochtragenden Teiles auf einen ausreichend großen Schraubendurchmesser ausgelegt werden. Dies ist aus verfahrenstechnischen oder räumlichen Gründen manchmal nicht möglich. Wo dies jedoch möglich ist, entsteht zusätzlicher Materialaufwand. Letzterer fällt dann besonders ins Gewicht, wenn, wie z.B. in der Halbleitertechnik mit hochreinen,teuren Spezialwerkstoffen gearbeitet werden muß. Wollte man diesen Schwierigkeiten dadurch begegnen, daß die Wandstärke nur an den die Bohrungen aufnehmenden Stellen entsprechend stark ausgelegt ist, entstünde wiederum erhöhter Bearbeitungsaufwand.

Der vorliegenden Erfindung liegt deshalb die Aufgabe zugrunde, eine Schraubverbindung der eingangs beschriebenen Gattung zu schaffen, mit der zylinderförmige Hohlkörper oder ebene oder einfach gekrümmte Platten mit geringer Wandstärke durch in mit Muttergewinde versehene Sacklochbohrungen eingreifende Schrauben mit Basisteilen verbunden werden können, ohne daß

- mit einem hohen Herstellungsaufwand erfordernden kleinen Schrauben,
- an der Grenze der Belastbarkeit der Schrauben (Bolzen und Gewinde), oder
- wegen des Erfordernisses zur Erreichung bestimmter Festigkeiten innerhalb der Schraubverbindung mit größeren Materialstärken der zu verbindenden Teile oder größeren Materialstärken an den Bohrungen oder
- mit komplizierten Formgebungen

gearbeitet werden muß und mit der unabhängig von den Erfordernissen der Schraubverbindung die Ausführung eines für den jeweiligen Anwendungsfall optimierten Bauteiles möglich ist.

Die Aufgabe wird mit einer Schraubverbindung der eingangs genannten Art dadurch gelöst, daß die Sacklochbohrungen an mindestens einer ihrer Längsseiten soweit angeschnitten sind, daß sie an den Anschnitten über mindestens einen Teil der Höhe der gewindetragenden Zone offen sind und ein unterbrochenes Muttergewinde für den Eingriff der Schrauben haben, die die zu verbindenden Teile zusammenspannen.

Die Verbindung kann je nach Anwendungsfall mit einer, zwei oder mehreren Schrauben hergestellt werden, wobei ein Zusammenspannen mit zwei Schrauben bevorzugt wird. Zur Erhöhung der Stabilität der Verbindung, zu ihrer Entlastung von seitlich wirkenden Druck- und Biegekräften und zur leichteren Positionierung der zu verbindenden Teile greift vorteilhafterweise das die Sacklochbohrungen aufweisende Teil in eine passend geformte Nut an dem Teil, mit dem es verbunden werden soll, ein. Da die Nut dazu, von einer ganz geringen positiven Abweichung abgesehen, die Längen- und Breitenabmessungen des von ihr aufzunehmenden Teils hat, muß sie an den Stellen, an denen die Schrauben hindurchgeführt werden, auf den Durchmesser des Außengewindes des Schraubenbolzens erweitert sein.

Die Unterlagen, auf die die Sacklöcher enthaltenden Teile geschraubt werden, haben in der Regel Platten- oder Blockform. Es sind aber auch andere Formen, wie z.B. Teilzylinder auf deren Mantelfläche eine dünne Platte in Richtung der im Scheitel liegenden Mantellinie oder in einer in beliebiger Lage angebrachten Nut befestigt ist, anwendbar. Auf den Unterlagekörpern kann ein oder es können mehrere der Sacklöcher enthaltende Teile in allen Anordnungen, die durch die Geometrie und die Festigkeit der Bauteile möglich sind, befestigt werden.

Die Teile, die nach der erfindungsgemäßen Anordnung verbunden werden sollen, sind aus Keramik, wie z.B. Werkstoffen aus der Gruppe der Oxide (z.B. Aluminiumoxidmodifikationen, Spinelle, Rutil, Siliciumdioxid), Carbide (z.B. Siliciumcarbid), Nitride (z.B. Bornitrid, Titannitrid, Siliciumnitrid), Titanate (z.B. Barium- oder Strontiumtitanat), Ferrite und aus der Gruppe Kohlenstoff und Graphit. Wegen ihrer guten Bearbeitbarkeit in Verbindung mit der, von oxidierenden Bedingungen abgesehen, ausgezeichneten chemischen Beständigkeit und den guten physikalischen Eigenschaften, z.B. der elektrischen Leitfähigkeit, können Werkstoffe aus Kohlenstoff und/oder Graphit bevorzugt für die erfindungsgemäßen Anordnungen verwendet werden. Vorteilhaft ist auch der Einsatz von mit Fasern oder Whiskern jeder Art verstärkten Teilen aus Kohlenstoff und/oder Graphit, da unter Beibehaltung gleicher Formgebungs- und Bearbeitungsmöglichkeiten die gezielte Beeinflussung verschiedener Eigenschaften möglich ist. Für manche Anwendungen, z.B. bei der Herstellung von elektronischen Bauteilen, müssen Teile aus Reinstgraphit verwendet werden. Ausführungsform und Materialsorte der zu verbindenden Teile richten sich nach den Erfordernissen des jeweiligen Anwendungsfalles. Es können Teile aus der gleichen Materialsorte aber auch Teile aus verschiedenen Materialien miteinander kombiniert werden.

Gemäß einer Ausführungsform der Erfindung wird eine quadratische bis rechteckige Platte mit den ungefähren Abmessungen Höhe 8 bis 25 cm, Breite 3 bis 10 cm, und Dicke 0,2 bis 1 cm, die an einer ihrer Schmalseiten Sacklochbohrungen mit Muttergewinde hat in die passend gearbeitete Nut eines quaderförmigen Blockes oder einer Grundplatte eingesetzt. Die mit Muttergewinden ausgestatteten Sacklochbohrungen haben an zwei gegenüberliegenden Seiten parallel zur Längsachse der Bohrungen verlaufende Öffnungen, so daß das Muttergewinde auf diesen zwei Seiten über die Breite der Öffnungen unterbrochen ist. Der Block, bzw. die Grundplatte hat Bohrungen, die mit den Sacklochbohrungen der in die Nut eingesteckten und so fixierten Platte fluchten. Die eingesteckte Platte wird mittels durch die Bohrungen des Grundteils gesteckter und in die Sacklochbohrungen eingreifender Schrauben mit dem Grundteil verspannt, wobei die Schraubenköpfe in entsprechenden, auf der der Nut entgegengesetzten Seite des Grundteils befindlichen Senkungen aufgenommen werden.

Die Vorteile der erfindungsgemäßen Schraubverbindung bestehen darin, daß die die Sacklochbohrungen tragenden Einbauteile in geringeren Materialstärken ausgelegt werden können. Damit können diese Teile den jeweils für sie günstigen, verfahrenstechnischen Bedingungen besser angepaßt und es kann der Materialaufwand gesenkt werden. Des weiteren ist die Einhaltung einfacher Bearbeitungsgeometrien möglich und schließlich können die Wirkung der Verschraubung beeinträchtigende Materialreste oder Verunreinigungen aus den offenen Sacklochbohrungen leicht entfernt werden.

Die Erfindung wird anhand von Zeichnungen beispielhaft beschrieben:

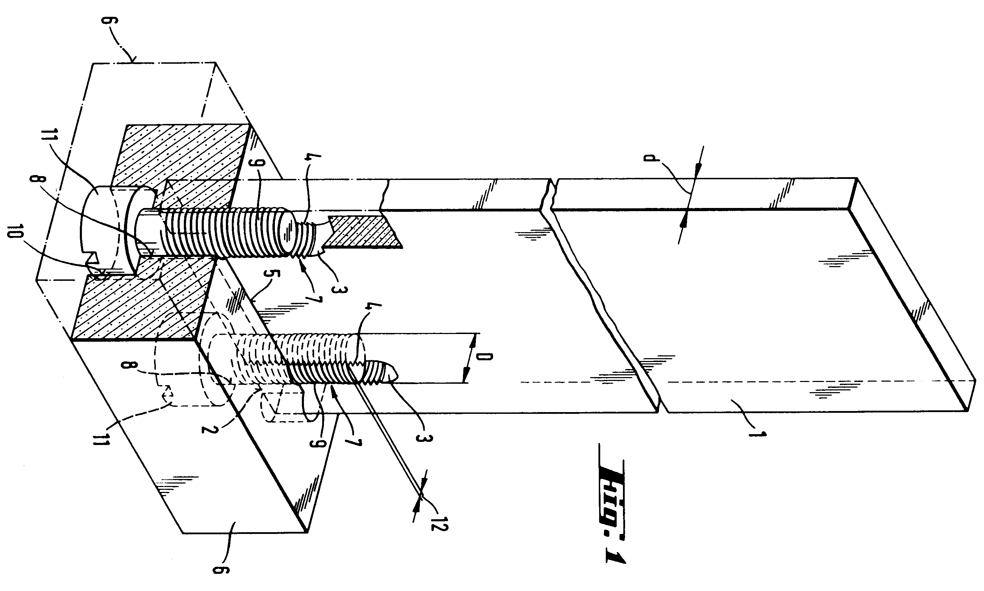

Fig. 1    zeigt in einer perspektivischen Ansicht eine auf einen Bodenblock erfindungsgemäß festgespannte dünne Platte.

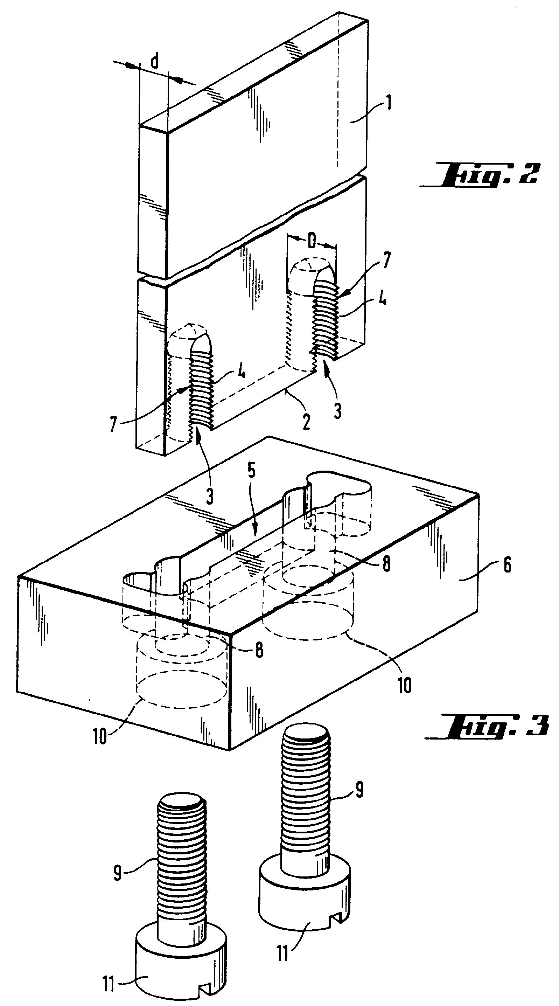

Fig. 2    zeigt die dünne Platte mit an zwei Längsseiten angeschnittenen Sacklochbohrungen.

Fig. 3    gibt die perspektivische Ansicht eines Basisblockes wieder.

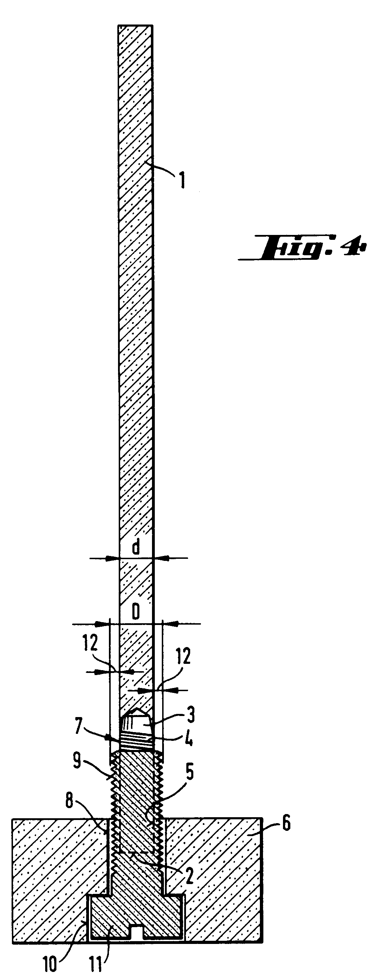

Fig. 4    gibt die Schnittansicht einer in einem Basisblock befestigten Platte wieder.

Eine rechteckige, flache Platte 1, die an einer ihrer Schmalseiten 2 zwei Sacklochbohrungen 3 mit Muttergewinde 4 hat, ist in die passend gearbeitete Nut 5 eines Basisblockes 6 eingesteckt. Die Durchmesser D der mit Muttergewinden 4 ausgestatteten Sacklochbohrungen 3 sind größer als die Dicke d der Platte 1 an ihrer Schmalseite 2, in der sie sich befinden. Sie haben infolgedessen an zwei gegenüberliegenden Seiten parallel zur Längsachse der Sacklochbohrungen 3 verlaufende Öffnungen 7, so daß das Muttergewinde auf diesen zwei Seiten über die Breite der Öffnungen unterbrochen ist. Der Basisblock 6 hat Bohrungen 8, die mit den Sacklochbohrungen 3 der in die Nut 5 eingesteckten und damit in ihrer Lage fixierten Platte 1 fluchten. Die eingesteckte Platte 1 ist mit Schrauben 9, die von der der Nut 5 gegenüberliegenden Seite durch die Bohrungen 8 des Basisblockes 6 geführt sind und die in die auf zwei Seiten unterbrochenen Muttergewinde 4 der Platte 1 eingreifen mit dem Basisblock 6 fest verspannt. Konstruktionsbedingt treten die Schraubenbolzen der Schrauben 9 an den Stellen, an den die Sacklochbohrungen 3 offen sind, über die Platte 1 beidseitig seitlich hervor, wodurch Überstände

$$12 = \left( \frac{D-d}{2} \right)$$

gebildet werden. Auf der der Nut 5 entgegengesetzten Seite des Basisblockes 6 sind Senkungen 10 vorgesehen, die die Köpfe 11 der Schrauben 9 aufnehmen.

## Patentansprüche

1.  Schraubverbindung enthaltend Keramikteile (1; 6; 9), eingeschlossen Teile aus Kohlenstoff und Graphit, nämlich
    - ein erstes Teil (1), das ebene oder gebogene Wände aufweist oder das aus einer ebenen oder gebogenen Platte besteht,
    - ein zweites, eine Unterlage (6) für das erste Teil (1) bildendes Teil und
    - Schrauben (9)
    wobei das erste Teil (1) mit Muttergewinden (4) versehene Sacklochbohrungen (3) hat,
    das zweite, als Unterlage (6) dienende Teil mit diesen Sacklochbohrungen (3) fluchtende und geometrisch passende Vorrichtungen (5; 8; 10) für die Aufnahme und Halterung des ersten Teils (1) sowie der Schrauben (9) hat
    und in der das erste Teil (1) mit der Unterlage (6) mittels in die Sacklochbohrungen (3) des ersten Teils (1) eingreifender und in der Unterlage (6) gegengehalterter Schrauben (9) verbunden ist,
    dadurch gekennzeichnet, daß
    sich die Sacklochbohrungen (3), ausgehend von den der Unterlage (6) zugewandten Stirnseiten der Wände oder ausgehend von einer entsprechenden Stirnseite einer Wand des auf dieser Unterlage (6) zu befestigenden ersten Keramikteils (1)
    parallel zu mindestens einer der Oberflächen dieser Wände oder Wand in diese Wände oder Wand erstrecken, daß diese Wände oder diese Wand mindestens in den die Sacklochbohrungen (3) enthaltenden Teilbereichen im Verhältnis zum Durchmesser der Sacklochbohrungen (3) eine solche Stärke haben, daß die Sacklochbohrungen (3) an mindestens einer ihrer Längsseiten angeschnitten und offen sind,
    so daß die die zu verbindenden Teile zusammenspannenden Schrauben (9) in unterbrochene Muttergewinde (4) eingreifen und daß die Schraubenbolzen an diesen offenen Zonen (7) zum Teil über die Oberfläche der die Sacklochbohrungen (3) enthaltenden Wand oder Wände hervortreten.

2.  Schraubverbindung nach Patentanspruch 1,
    dadurch gekennzeichnet, daß
    die Sacklochbohrungen (3) an mindestens einer ihrer Längsseiten soweit angeschnitten sind, daß sie an den Anschnitten über die gesamte Höhe der gewindetragenden Zone offen sind und dort ein unterbrochenes Muttergewinde (4) haben.

3. Schraubverbindung entsprechend den Patentansprüchen 1 oder 2,
dadurch gekennzeichnet, daß
- das erste Teil (1) nur eine mit Muttergewinde (4) versehene Sacklochbohrung (3) hat,
- das zweite, als Unterlage (6) dienende Teil mit dieser Sacklochbohrung (3) fluchtende und geometrisch passende Vorrichtungen (5; 8; 10) für die Aufnahme und Halterung des ersten Teils (1) hat
und das erste Teil (1) durch eine Schraube mit der Unterlage verbunden ist.

4. Schraubverbindung nach den Patentansprüchen 1, 2 oder 3,
dadurch gekennzeichnet, daß
die zu verbindenden Teile (1; 6) und die Schrauben (9) aus Werkstoffen aus der Gruppe Kohlenstoff und Graphit bestehen.

5. Schraubverbindung nach den Patentansprüchen 1, 2, 3 oder 4,
dadurch gekennzeichnet, daß
mindestens eins der zu verbindenden (1; 6) und der die Verbindung herstellenden (9) Teile aus mit Fasern verstärktem Werkstoff aus der Gruppe Kohlenstoff und Graphit bestehen.

6. Schraubverbindung nach den Patentansprüchen 1, 2, 3, 4 oder 5,
dadurch gekennzeichnet, daß
der die Sacklochbohrungen (3) enthaltende Teil (1) eine Platte mit orthogonalen Begrenzungsflächen der Abmessungen Höhe 8 bis 25 cm, Breite 3 bis 10 cm und Dicke 0,2 bis 1 cm ist, die sich mit der die Sacklochbohrungen (3) enthaltenden Seite in der dazu passend ausgebildeten Nut (5) eines quaderförmigen Blockes (6), der den Block (6) durchsetzende Bohrungen (8) für die Aufnahme der die Platte (1) und den Block (6) zusammenspannenden Schrauben (9) hat und dessen Bohrungen (8) an der der Nut (5) entgegengesetzten Seite für die versenkte Aufnahme der Schraubenköpfe (11) erweitert sind, befindet.

7. Schraubverbindung nach den Patentansprüchen 4, 5 oder 6,
dadurch gekennzeichnet, daß
die miteinander verbundenen Teile (1; 6) aus Reinstgraphit sind.

## Claims

1. Screw connection containing ceramic parts (1; 6; 9), including parts made from carbon and graphite, specifically
- a first part (1) incorporating flat or curved walls or consisting of a flat or curved plate,
- a second part forming a base (6) for the first part (1) and
- screws (9),
the first part (1) having blind bores (3) provided with internal screw threading (4),
the second part, acting as a base (6), having geometrically matching devices (5; 8; 10) aligned with said blind bores (3) for receiving and mounting the first part (1) and the screws (9),
and wherein the first part (1) is connected to the base (6) by means of screws (9) engaging in the blind bores (3) in the first part (1) and counter-set in the base (6),
characterised in that
the blind bores (3), starting from the wall end faces facing the base (6), or starting from a corresponding end face of a wall of the first ceramic part (1) to be fastened on said base (6),
extend parallel to at least one of the surfaces of said walls or wall into said walls or wall,
and that said walls or wall, at least in the portions containing the blind bores (3), have a thickness in relation to the diameter of the blind bores (3) such that the blind bores (3) are incised and open on at least one of their long sides,
with the result that the screws (9) clamping together the parts to be connected engage in interrupted screw threads (4) and that at these open areas (7) some of the bolts protrude past the surface of the wall or walls containing the blind bores (3).

2. Screw connection according to claim 1,
characterised in that on at least one of their long sides the blind bores (3) are incised to the extent that at the incisions they are open over the entire height of the thread-bearing area and there have an interrupted screw thread (4).

**3.** Screw connection according to claims 1 or 2,
characterised in that
- the first part (1) has only one blind bore (3) provided with an internal screw thread (4),
- the second part, acting as a base (6), has geometrically matching devices (5; 8; 10) aligned with said blind bore (3) for receiving and mounting the first part (1),
and the first part (1) is connected to the base by a screw.

**4.** Screw connection according to claims 1, 2 or 3,
characterised in that
the parts (1; 6) to be connected and the screws (9) consist of materials from the group carbon and graphite.

**5.** Screw connection according to claims 1, 2, 3 or 4,
characterised in that
at least one of the parts to be connected (1; 6) and the parts (9) making the connection consist of fibre-reinforced material from the group carbon and graphite.

**6.** Screw connection according to claims 1, 2, 3, 4 or 5,
characterised in that
the part (1) containing the blind bores (3) is a plate with orthogonal boundary faces 8 to 25 cm high, 3 to 10 cm wide and 0.2 to 1 cm thick, which has the side containing the blind bores (3) situated in the groove (5) matched thereto in a parallelepipedic block (6) which has bores (8) passing through the block (6) for receiving the screws (9) clamping together the plate (1) and the block (6), and the bores (8) of which are expanded on the side opposite the groove (5), for countersinking the screw heads (11).

**7.** Screw connection according to claims 4, 5 or 6,
characterised in that
the parts (1; 6) joined together are made from highest-grade graphite.


## Revendications

**1.** Liaison à vis pour des pièces en matière céramique (1, 6, 9) y compris des pièces en carbone et en graphite, à savoir :
- une première pièce (1) ayant des parois planes ou courbes et se composant d'une plaque plane ou courbe,
- d'une seconde pièce formant l'embase (6) pour la première pièce (1) et
- des vis (9),
- la première pièce (1) ayant des trous borgnes (3) munis de taraudages (4),
- la seconde pièce servant d'embase (6) ayant des dispositifs (5, 8, 10) alignés sur les trous borgnes (3) et adaptés géométriquement pour recevoir et retenir la première pièce (1) ainsi que des vis (9) et
- la première pièces (1) étant reliée à l'embase (6) à l'aide de vis (9) se vissant dans les trous borgnes (3) de la première pièce (1) et s'appuyant sur l'embase (6),
liaison caractérisée en ce que :
- les perçages borgnes (3) partant des faces frontales des parois tournées vers l'embase (6) ou partant d'une face frontale correspondante d'une paroi d'une première pièce en matière céramique (1) à fixer sur cette embase (6), s'étendent parallèlement à au moins l'une des faces de ces parois ou de cette paroi ou dans ces parois ou dans cette paroi, et ces parois ou cette paroi ayant, dans leurs parties munies des perçages borgnes (3), une épaisseur prise par rapport au diamètre des perçages borgnes (3), telle que les perçages borgnes (3) soient au moins coupés et ouverts suivant l'un de leurs grands côtés, de façon que les vis (9) ne réunissant pas les pièces par serrage et viennent se visser dans des taraudages (4) interrompus, et que les corps de vis dans ces zones ouvertes (7) viennent en saillie partiellement par rapport à la surface de la paroi ou des parois munies de ces perçages borgnes (3).

**2.** Liaison à vis selon la revendication 1, caractérisée en ce que les perçages borgnes 3 sont coupés au moins sur l'un de leurs grands côtés de sorte que leur coupe les ouvre sur toute la hauteur de la zone taraudée et que le taraudage est ouvert à cet endroit.

**3.** Liaison à vis selon les revendications 1 ou 2, caractérisée en ce que

- la première partie (1) ne comporte qu'un perçage borgne (3) muni d'un taraudage (4),
- la seconde pièce servant d'embase (6) est munie de dispositifs (5, 8, 10) alignés sur ce perçage borgne (3) et adaptés géométriquement pour recevoir et retenir la première pièce (1) et
- la première pièce (1) est reliée à l'embase par une vis.

4. Liaison à vis selon les revendications 1, 2, 3, caractérisée en ce que les pièces (1,6) à relier et les vis (9) sont réalisées dans des matières du groupe carbone et graphite.

5. Liaison à vis selon les revendications 1, 2, 3, 4, caractérisée en ce qu'au moins l'une des pièces à relier (1, 6) et la pièce (9) réalisant la liaison, sont en une matière renforcée de fibres du groupe du carbone et du graphite.

6. Liaison à vis selon les revendications 1, 2, 3, 4, 5, caractérisée en ce que la pièce (1) munie des perçages borgnes (3) est une plaque dont les surfaces limites sont orthogonales, avec pour dimensions une hauteur de 8 à 25 cm, une largeur de 3 à 10 cm et une épaisseur de 0,2 à 1 cm le côté comportant des perçages borgnes (3) se logeant dans une rainure (5) de dimensions appropriées formée dans un bloc parallélipédique (6), avec des perçages (8) traversant le bloc (6) pour recevoir des vis (9) serrant la plaque (1) et le bloc (6), et les perçages (8) comportant, du côté opposé à celui de la rainure (5), des lamages destinés à recevoir les têtes de vis (11).

7. Liaison à vis selon les revendications 4, 5 ou 6, caractérisée en ce que les pièces (1, 6) à réunir sont en graphite extrêmement pur.

*Fig. 1*

*Fig. 2*

*Fig. 3*

**Fig. 4**